# EUROPÄISCHE PATENTANMELDUNG

(11) **EP 3 584 109 A1**
(43) Veröffentlichungstag der Anmeldung: **25.12.2019**
(21) Anmeldenummer: 19181149.6
(22) Anmeldetag: 19.06.2019
(51) Int. Cl.: B60L 53/10, H01R 13/00, B60L 53/302, H01B 12/16

(54) **LADESTATION FÜR ELEKTROMOBILE MIT VERBINDUNGSKABEL UND STECKER**

(30) Priorität: 19.06.2018 DE 102018004868
(71) Anmelder: Eichenauer Heizelemente GmbH & Co. KG, 76870 Kandel (DE)
(72) Erfinder: Gartner, Matthias, 76228 Karlsruhe (DE)
(74) Vertreter: Twelmeier Mommer & Partner

(57) **Zusammenfassung**

Beschrieben wird eine Vorrichtung zum Laden eines mit elektrischer Energie antreibbaren Fahrzeuges, wobei die Vorrichtung eine stationäre Ladestation, einen mit dem aufzuladenden Fahrzeug verbindbaren Stecker und wenigstens ein Kabel zur Herstellung einer Verbindung zwischen Stecker und Ladestation umfasst, wobei ein Strompfad hergestellt ist, der die Teile elektrisch verbindet und ein Teil des Strompfades einen elektrischen Leiter aufweist, dessen Widerstand bei Unterschreiten einer Sprungtemperatur auf null fällt und der Leiter damit ein Supraleiter ist. Erfindungsgemäß ist vorgesehen, dass der Supraleiter die Funktion eines Kurzschlussstrombegrenzers hat und in der Ladestation angeordnet ist.

## Beschreibung

Die Erfindung geht aus von einer Vorrichtung zum Laden eines mit elektrischer Energie antreibbaren Fahrzeuges mit den im Oberbegriff des Anspruchs 1 angegebenen Merkmalen, also eines Elektrofahrzeugs mit einer Batterie. Eine Vorrichtung mit den im Oberbegriff des Anspruchs 1 angegebenen Merkmalen ist aus der DE 10 2010 050 562 B3 bekannt.

Beim schnellen Aufladen einer Batterie eines mit elektrischer Energie antreibbaren Fahrzeuges heizt sich der elektrische Leiter eines Strompfades von der Ladestation über das Verbindungskabel und den Stecker, der mit dem Fahrzeug verbunden ist, aufgrund des hohen Ladestromes unweigerlich aufgrund von ohmschen Stromwärmeverlusten auf. Das Aufheizen des Strompfades ist jedoch auf eine Grenztemperaturerhöhung limitiert. Dies wiederum führt zu einem maximalen Ladestrom von bis zu 200 A Dauerlast.

Es ist daher Stand der Technik, Kabel und Stecker durch eine parallel geführte Kühlmittelleitung während des Ladevorganges zu kühlen. Aber auch hierdurch kann die Erhöhung der Temperatur bei hohen Ladeströmen lediglich gemindert, aber nicht verhindert werden. Zudem können technische Defekt zu einem Kurzschluss führen, bei dem wegen der ohnehin hohen Ladeströme erhebliche Schäden verursacht werden

Vor diesem Hintergrund besteht die Aufgabe der Erfindung deshalb darin, eine Vorrichtung zum Aufladen von elektrisch betreibbaren Fahrzeugen zu schaffen, der sich trotz hoher Ladeströme auch im Falle eines technischen Defekts, insbesondere Kurzschlusses, nicht überhitzt.

Diese Aufgabe wird durch eine Vorrichtung mit den im Anspruch 1 angegebenen Merkmalen gelöst. Vorteilhafte Weiterbildungen der Erfindung sind Gegenstand von Unteransprüchen.

Indem ein Teil des Strompfades in der Ladestation von einem Supraleiter gebildet ist, wird ein schnell ansprechender Kurzschlussstrombegrenzer geschaffen. Supraleiter verlieren ihre supraleitenden Eigenschaften nämlich nicht nur beim Überschreiten einer kritischen Temperatur, sondern auch beim Überschreiten eines kritischen Stroms. Da die Stromtragfähigkeit von Supraleitern inhärent begrenzt ist, wird durch den Einsatz eines Supraleiters somit ein schnell ansprechender und zuverlässiger Kurzschlussstrombegrenzer geschaffen.

Die Anordnung dieses Supraleiters in der Ladestation ermöglicht eine gute thermische Isolation des Supraleiters bzw. des Kühlmittels, z.B. flüssiger Stickstoff, so dass der mit dem Einsatz des Supraleiters zur Kühlung verbundene Energieauffand vorteilhaft gering gehalten werden kann.

Zusätzlich kann auch der Strompfand in dem Kabel oder ein Teil desselben von einem Supraleiter gebildet werden. Durch die Ausgestaltung des Leiters in dem Kabel als Supraleiter findet keine Temperaturerhöhung entlang des Strompfades statt, da der Leiter widerstandsfrei ist und dadurch keine Leitungsverlust auftreten. Somit entsteht auch keine Verlustwärme.

Dabei kann der Leiter des gesamten Strompfads als Supraleiter ausgelegt sein. Bevorzugt ist aber, nur einen Teil des Strompfades, insbesondere nur in der Ladestation mit einem Supraleiter auszuführen. Der Supraleiter kann dem Kabel in der Ladestation vorgeschaltet sein. Mit anderen Worten ist also ein Kabelanschluss der Ladestation, an den das Kabel angeschlossen ist, zwischen dem Kurzschlussstrombegrenzer und dem Kabel angeordnet.

Äußerst bevorzugt ist es, nur ein kurzes Stück des Strompfades mit einem Supraleiter zu versehen. In diesem Fall ist das Ziel nicht das Verhindern einer Temperaturerhöhung entlang des Strompfades, sondern in diesem Fall hat das Leiterstück die Funktion einer Kurzschlussstrombegrenzung. Dieser Supraleiterstrombegrenzer schaltet im Fehlerfall, z.B. bei einem Kurzschluss in der Ladebatterie, die Stromversorgung auch bei sehr hohen Strömen sofort ab.

## Patentansprüche

1. Vorrichtung zum Laden eines mit elektrischer Energie antreibbaren Fahrzeuges, wobei die Vorrichtung eine stationäre Ladestation, einen mit dem aufzuladenden Fahrzeug verbindbaren Stecker und wenigstens ein Kabel zur Herstellung einer Verbindung zwischen Stecker und Ladestation umfasst, wobei ein Strompfad hergestellt ist, der die Teile elektrisch verbindet und ein Teil des Strompfades einen elektrischen Leiter aufweist, dessen Widerstand bei Unterschreiten einer Sprungtemperatur auf null fällt und der Leiter damit ein Supraleiter ist, **dadurch gekennzeichnet, dass** der Supraleiter die Funktion eines Kurzschlussstrombegrenzers hat und in der Ladestation angeordnet ist.

2. Vorrichtung nach Anspruch 1, **dadurch gekennzeichnet, dass** das Kabel einen Supraleiter und einen kühlmitteldurchflossenen Hin- und Rückkanal aufweist, die wärmeleitend mit dem Supraleiter verbunden sind.

3. Vorrichtung nach Anspruch 1 oder 2 **dadurch gekennzeichnet, dass** der Stecker einen Supraleiter und einen kühlmitteldurchflossenen Hin- und Rückkanal aufweist, die wärmeleitend mit dem Supraleiter verbunden sind und die im Stecker miteinander verbunden sind.

4. Vorrichtung nach mindestens einem der vorangehenden Ansprüche, **dadurch gekennzeichnet, dass** die Ladestation das Kühlmittel zum Kühlen des Supraleiters bereitstellt.

5. Vorrichtung nach mindestens einem der vorangehenden Ansprüche, **dadurch gekennzeichnet, dass** der Leiter ein Hochtemperatursupraleiter und das Kühlmittel flüssiger Stickstoff ist.

6. Vorrichtung nach mindestens einem der vorangehenden Ansprüche, **dadurch gekennzeichnet, dass** der Supraleiter als Kurzschlussbegrenzer in der Ladestation dem Kabel vorgeschaltet ist.
